# EUROPÄISCHE PATENTSCHRIFT

(11) **EP 2 737 335 B1**
(45) Veröffentlichungstag und Bekanntmachung des Hinweises auf die Patenterteilung: **28.06.2017**
(21) Anmeldenummer: 12738467.5
(22) Anmeldetag: 25.07.2012
(51) Int. Cl.: G01S 7/481, G01S 17/93

(54) **LASERSCANNER**
LASER SCANNER
LECTEUR LASER

(30) Priorität: 26.07.2011 EP 11175391
(43) Veröffentlichungstag der Anmeldung: 04.06.2014
(73) Patentinhaber: Hexagon Technology Center GmbH, 9435 Heerbrugg (CH)
(72) Erfinder: PETTERSSON, Bo, 1279 Luxemburg (LU); SPRENGER, Bernhard, 9443 Widnau (CH); SIERCKS, Knut, 9402 Mörschwil (CH)
(74) Vertreter: Gyaja, Christoph Benjamin
(86) Internationale Anmeldenummer: PCT/EP2012/064605
(87) Internationale Veröffentlichungsnummer: WO 2013/014189

(56) Entgegenhaltungen:
- WO-A2-97/40342
- US-A1- 2011 006 943
- US-B1- 7 631 839
- ANONYMOUS: "Parallel Kinematics", 20060716 , 16. Juli 2006 (2006-07-16), Seiten 12-49, XP007919746, Gefunden im Internet: URL:http://www.simplex-cnc.com.au/download /ParallelKinemtaicsMachines.pdf [gefunden am 2011-11-16]
- RÖSE ET AL: "Parallelkinematische Mechanismen zum intrakorporalen Einsatz in der laparoskopischen Chirurgie", PH.D. THESIS TU DARMSTADT, , 19. Januar 2011 (2011-01-19), Seiten 1-197, XP007919743, Gefunden im Internet: URL:http://tuprints.ulb.tu-darmstadt.de/id /eprint/2493 [gefunden am 2011-11-16]
- kodlab: "Laser Scanner Demonstration on X-RHex", , 20. Januar 2011 (2011-01-20), XP002663779, Gefunden im Internet: URL:http://www.youtube.com/watch?v=4ak2q_C Duf0 [gefunden am 2011-11-17]

## Beschreibung

Die Erfindung betrifft einen Laserscanner zur Vermessung einer Oberfläche und zur Erzeugung von einer die Oberfläche koordinativ wiedergebenden Punktwolke nach dem Oberbegriff des unabhängigen Anspruchs 1.

WO1997/040342A2 beschreibt einen Laserscanner zur Erfassung eines beliebigen entfernten Objekts in drei Dimensionen. Der Laserscanner weist eine Laserquelle zur Erzeugung von Laserlicht und einen Laserdetektor zum Empfang von Laserlicht der Laserquelle auf. Erzeugtes Laserlicht tritt an einer Austrittstelle aus dem Laserscanner und wird vom Objekt gestreut und tritt an einer Eintrittstelle wieder in den Laserscanner. Der Laserscanner weist Drehantriebe zur Drehung von Spiegeln mit zwei Freiheitsgraden um zwei orthogonal zueinander stehende Achsen und Aufnehmer zur Ermittlung dieser Drehung auf. Durch Drehung der Spiegel scannt Laserlicht über eine Vielzahl von Streupunkten des Objekts. Die Laserquelle, der Laserdetektor und die Aufnehmer geben Zustandssignale aus. Der Laserscanner weist eine Auswertungseinheit zur Auswertung der Zustandssignale auf. Die Auswertung der Impulslaufzeit des gestreuten Laserlichts liefert Entfernungswerte zwischen dem Laserscanner und den Streupunkten des Objekts. Der Laserscanner ist auf einem Stativ am Objekt positionierbar und wird von einer elektrischen Stromversorgung mit elektrischem Strom versorgt. Das Sichtfeld des Laserscanners beträgt 40°x40°. Für Einzelmessungen über eine Entfernung von 1 bis 50m beträgt die Lagegenauigkeit +/-6mm und die Streckengenauigkeit +/-4mm. Die Scanngeschwindigkeit der Drehantriebe beträgt 1000 bis 5000 Punkt/Sekunde.

Ein solcher Laserscanner ist von der Anmelderin unter der Bezeichnung HDS2500 vertrieben worden, sein aktuell vertriebener Nachfolger wird mit HDS3000 bezeichnet. Beim HDS3000 ist das Sichtfeld mit 360°x270° bedeutend größer, die Lagegenauigkeit und Streckengenauigkeit der Entfernungswerte ist gleich geblieben. Die Scanngeschwindigkeit der Drehantriebe beträgt in vertikaler Richtung 5000 Punkt/Sekunde und in horizontaler Richtung 20000 Punkt/Sekunde. Das Gewicht des HDS3000 beträgt 16kg, seine räumlichen Abmessungen betragen 27x37x51cm³ (beide Angaben beziehen sich auf den HDS3000 ohne Auswertungseinheit, ohne elektrische Stromversorgung und ohne Stativ).

Weitere Details zur Bauweise eines Laserscanners sind in WO2008/019856A1 offenbart. Dieser Laserscanner weist einen Drehkörper auf, der über eine erste Drehachse um einen Rotor drehbar gelagert ist, der Rotor wiederum ist über eine zweite Drehachse an einem Stator drehbar gelagert. Ein erster Drehantrieb treibt den Drehkörper und ein zweiter Drehantrieb treibt den Rotor an. Im Rotor sind der erste Drehantrieb, die Laserquelle und der Laserdetektor angeordnet. Auf dem Drehkörper sind die Austrittstelle, die Eintrittstelle und Spiegel angeordnet. Von der Laserquelle im Rotor stammendes Laserlicht wird über eine optische Sendeverbindung zum Drehkörper und von dort über Spiegel zur Austrittstelle geführt. Vom Objekt gestreutes Laserlicht tritt an der Eintrittstelle am Drehkörper ein und wird über Spiegel und eine optische Empfangsverbindung zum Laserdetektor im Rotor geführt. Die optische Sendeverbindung und die optische Empfangsverbindung sind, dem Rotor und dem Drehkörper zugeordnete, von der Drehung entkoppelte optische Übertragungselemente. Ein weiterer Laserscanner ist in US2011/0006943 offenbart. Eine erste Aufgabe der Erfindung besteht darin, einen verbesserten Laserscanner bereitzustellen. Weitere Aufgaben der Erfindung bestehen in der Bereitstellung eines Laserscanners mit hoher Lagegenauigkeit und Streckengenauigkeit, mit hoher Scanngeschwindigkeit von einfacher Bauweise, mit geringen räumlichen Abmessungen, mit niedrigem Gewicht, mit geringem elektrischen Stromverbrauch, von hoher Feldtauglichkeit und mit geringen Herstellungs- und Wartungskosten. Zumindest eine dieser Aufgaben wird durch die kennzeichnenden Merkmale der unabhängigen Ansprüche oder der abhängigen Ansprüche gelöst.

Erfindungsgemäß weist der Laserscanner zur Vermessung von einer Oberfläche von Räumen und/oder Objekten und zur Erzeugung von einer die Oberfläche koordinativ wiedergebenden Punktwolke eine Laserquelle zur Erzeugung von Laserlicht und einen Laserdetektor zum Empfang von Laserlicht der Laserquelle auf; eine Austrittstelle für den auf den jeweiligen Punkt der Oberfläche gerichteten Austritt von erzeugtem Laserlicht in Form eines gebündelten Laserstrahls und eine Eintrittstelle für den Eintritt von an dem jeweiligen Punkt der Oberfläche gestreutem Laserlicht sind an einer gegenüber einer stationären Basis des Laserscanners scannend verschwenkbaren Plattform des Laserscanners angeordnet. Der Laserscanner weist außerdem eine Entfernungsmessfunktionalität zur Bestimmung von einer jeweiligen Entfernung zu dem jeweiligen Punkt der Oberfläche basierend auf an dem jeweiligen Punkt der Oberfläche gestreutem und durch den Laserdetektor empfangenem Laserlicht und Mittel zur Erfassung von einer jeweiligen Raumrichtung zu dem jeweiligen Punkt der Oberfläche auf, insbesondere wobei die Mittel einen oder mehrere Aufnehmer zur Ermittlung von einer jeweiligen Schwenkstellung der Plattform gegenüber der Basis aufweisen. Ein parallel-kinematischer Antrieb verschwenkt erfindungsgemäß die Plattform gegenüber der Basis zum Scannen des Laserstrahls über eine Vielzahl von Punkten der Oberfläche.

Der Laserscanner mit parallel-kinematischem Antrieb verschwenkt eine Plattform im unmittelbaren Eingriff. Im Vergleich mit einer seriell-kinematischen Anordnung aus dem Stand der Technik mit zwei Drehantrieben, von denen ein erster Drehantrieb einen Rotor antreibt, an welchem Rotor der zweite Drehantrieb angebracht ist, bringt dies mehrere überraschende technische Wirkungen:
- Erstens wird die Lagegenauigkeit und Streckengenauigkeit des Laserscanners erhöht. Ansteuerungsfehler und Drehungenauigkeiten können sich nicht mehr von einem ersten Drehantrieb auf den zweiten Drehantrieb fortpflanzen.
- Zweitens weist der Laserscanner keine achsenspezifische Scanngeschwindigkeit mehr auf. Die beiden Drehantriebe sind vom Drehmoment her gleich ausgelegt, sie müssen aber verschieden große Massen antreiben. Dies hat zur Folge, dass die Scanngeschwindigkeit um die vertikale Achse des ersten Drehantriebs um ein Mehrfaches kleiner als diejenige um die horizontale Achse des zweiten Drehantriebs ist.
- Drittens wird die Scanngeschwindigkeit des Laserscanners erhöht. Für einen rasterförmigen oder spiralförmigen Flächenscann über n Streupunkte des Objekts muss jeder der beiden Drehantriebe n Drehungen ausführen, insgesamt werden 2n Drehungen ausgeführt. Im Unterscheid dazu verschwenkt der parallel-kinematische Antrieb die Plattform in einer kreisförmigen Spiralbewegung um einen Fixpunkt. Für einen vergleichbaren Flächenscann über n Streupunkte des Objekts muss der parallel-kinematische Antrieb lediglich n Schwenkbewegungen ausführen, was ceteris paribus die Scanngeschwindigkeit verdoppelt.

Vorteilhafte Weiterbildungen der Erfindung ergeben sich aus den Merkmalen der abhängigen Ansprüche.

Vorteilhafterweise verschwenkt der parallel-kinematische Antrieb die Plattform mit weitgehend gleicher Scanngeschwindigkeit in horizontaler Richtung und in vertikaler Richtung.

Der Laserscanner weist bei Verschwenken in horizontaler Richtung und in vertikaler Richtung die weitgehend gleiche Masseträgheit und die weitgehend gleiche Scanngeschwindigkeit auf, was dessen Lagegenauigkeit und Streckengenauigkeit erhöht.

Vorteilhafterweise weist der parallel-kinematische Antrieb mehrere Aktoren auf, die in einer Antriebsebene an der Plattform angeordnet sind, von denen jeder direkt auf die Plattform wirkt; vorzugsweise gibt der parallel-kinematische Antrieb für jedes Stellen eines Aktors ein erstes Zustandssignal aus.

Die Aktoren sind aktive Stellglieder und bewegen die Plattform. Die Aktoren des parallel-kinematischen Antriebs sind nun funktional und räumlich gruppiert in einer Antriebsebene an der Plattform angeordnet, was die Bauweise des Laserscanners vereinfacht und die räumlichen Abmessungen des Laserscanners verringert, da sich Drehantriebe nicht mehr wie im Stand der Technik in mehreren übereinander angeordneten Ebenen befinden. Auch lässt sich eine solche Antriebsebene einfach und wirksam sowohl gegen den Austritt von Vibrationen des parallel-kinematischen Antriebs als auch gegen den Eintritt von Staub, Dampf und Wasser aus der Umgebung kapseln, was die Feldtauglichkeit des Laserscanners erhöht und seine Wartungskosten tief hält.

Vorteilhafterweise weist der parallel-kinematische Antrieb mindestens zwei Aktoren auf; jeder der Aktoren ist entweder ein Linearaktor oder ein Rotationsaktor.

Zwei und mehr Aktoren verschwenken die Plattform des Laserscanners in einer kreisförmigen Spiralbewegung. So lassen sich zwei Aktoren mit zwei Freiheitsgraden in einer Antriebsebene anordnen; und sechs Aktoren lassen sich mit sechs Freiheitsgraden in einer Antriebsebene anordnen. Ein sukzessives Verstellen der Aktoren im Uhrzeigersinn oder Gegenuhrzeigersinn verschwenkt die Plattform für einen Flächenscann in einer kreisförmigen Spiralbewegung.

Vorteilhafterweise ermittelt ein Aufnehmer das Verschwenken der Plattform bezüglich der Basis; der Aufnehmer gibt für jedes erfasste Verschwenken der Plattform bezüglich der Basis ein zweites Zustandssignal aus. Vorteilhafterweise ist ein Aufnehmer einem Aktor zugeordnet, welcher Aufnehmer das Verschwenken der Plattform bezüglich der Basis im Bereich des ihm zugeordneten Aktors ermittelt und/oder ist einem Stabilisator ein Aufnehmer zugeordnet, welcher Aufnehmer das Verschwenken der Plattform bezüglich der Basis im Bereich des ihm zugeordneten Stabilisators ermittelt.

Im Vergleich mit einer seriell-kinematischen Anordnung aus dem Stand der Technik mit zwei Drehantrieben und einem Drehaufnehmer pro Drehantrieb, wo die Drehaufnehmer Drehungen bezüglich unterschiedlicher Referenzen wie Rotor und Stator erfassen, bringt diese parallel-kinematische Anordnung der Aufnehmer die überraschende technische Wirkung dass das Verschwenken der Plattform mehrfach bezüglich der gleichen Referenz, nämlich der Basis erfasst wird. Somit findet zum einen keine Fehlerfortpflanzung statt, und zum anderen erfolgt bei zwei oder mehr Aufnehmern für zwei und mehr Aktoren und/oder Stabilisatoren durch Mittelwertbildung eine Erniedrigung des Messfehlers, was die Lagegenauigkeit und Streckengenauigkeit des Laserscanners erhöht.

Vorteilhafterweise sind die Aktoren an einer Basis angebracht; die Aktoren leiten zumindest einen Teil der Last der Plattform in die Basis. Vorteilhafterweise weist der parallel-kinematische Antrieb einen Stabilisator auf; der Stabilisator ist mit einem ersten Lager direkt an der Plattform angebracht; der Stabilisator ist mit einem weiteren Lager direkt an einer Basis angebracht; diese Lager sind über einen Gelenkarm mechanisch miteinander verbunden; der Stabilisator leitet zumindest einen Teil der Last der Plattform in die Basis.

Der Stabilisator ist ein passives Stellglied und versteift die Plattform. Die Last der Plattform lässt sich über die Aktoren als auch über einen Stabilisator in die Basis leiten. Mit dem Stabilisator lässt sich die Steifigkeit des parallel-kinematischen Antriebs über Steifigkeitscharakteristika des Stabilisators gezielt einstellen. Wenn nur ein Teil der Last der Plattform über die Aktoren in die Basis geleitet wird, werden die Aktoren entlastet, weshalb sich die derart teilentlasteten Aktoren im Vergleich zu nicht teilentlasteten Aktoren bezüglich der räumlichen Abmessungen kleiner auslegen lassen, was zu Einsparungen bei den Herstellungskosten und beim elektrischen Stromverbrauch im Betrieb der Aktoren führt. Dadurch werden zudem die räumlichen Abmessungen des Laserscanners verringert und sein Gewicht erniedrigt.

Vorteilhafterweise dämpfen die Aktoren und/oder der Stabilisator zumindest einen Teil der Vibrationen des parallel-kinematischen Antriebs.

Die Aktoren als aktive Stellglieder und der Stabilisator als aktives Stellglied können auch Vibrationen an der Plattform, die beim Betrieb des parallel-kinematischen Antriebs entstehen, dämpfen. Durch Stellen von Dämpfungscharakteristika des Aktors und/oder durch Einstellen von Dämpfungscharakteristika des Stabilisators lassen sich Vibrationen an der Plattform gezielt dämpfen, was eine hohe Lagegenauigkeit und Streckengenauigkeit des Laserscanners bewirkt.

Vorteilhafterweise weist ein Rotationsaktor einen Drehantrieb, einen Dreharm und eine Lager auf; der Rotationsaktor ist mit der Lager direkt an der Plattform angebracht. Vorteilhafterweise ist das Lager entweder ein Gelenklager oder ein Drehlager oder ein Biegeelement.

Bei diesem Rotationsaktor übersetzt der Dreharm ein Drehmoment des Drehantriebs zu einem Ausgangsmoment des Rotationsaktors, welches Ausgangsmoment über das Lager direkt auf die Plattform wirkt. Verglichen mit dem Linearantrieb eines Linearaktors, der keine solche mechanische Übersetzung aufweist, benötigt der Rotationsaktor somit zur Erzielung des gleichen Ausgangsmoments einen relativ klein ausgelegten Drehantrieb, was zu Einsparungen bei den Herstellungskosten und beim elektrischen Stromverbrauch im Betrieb des Rotationsaktors führt. Auch wird eine Last der Plattform nicht wie beim Linearaktor direkt vom Linearantrieb aufgenommen, sondern vom Lager, was den Verschleiß und somit die Wartungskosten des Rotationsaktors tief hält.

Vorteilhafterweise bilden die Laserquelle, der Laserdetektor, die Austrittstelle, die Eintrittstelle und Spiegel zur Strahlführung an der Plattform eine erste optische Einheit.

Anders als im Stand der Technik erfolgt keine getrennte Anordnung von Laserquelle und Laserdetektor auf einem Rotor und Austrittstelle, die Eintrittstelle und Spiegel auf einem Drehkörper. Dadurch wird die Stahlführung vereinfacht, da keine von der Drehung entkoppelten optischen Übertragungselemente notwendig sind. Dadurch werden die Bauweise des Laserscanners vereinfacht und die Herstellungskosten des Laserscanners erniedrigt. Auch lässt sich eine solche optische Einheit einfach und wirksam gegen den Eintritt von Staub, Dampf und Wasser aus der Umgebung kapseln, was die Feldtauglichkeit des Laserscanners erhöht und seine Wartungskosten tief hält.

Vorteilhafterweise gibt die erste optische Einheit über elektrische oder optische Leitungen, vorzugsweise über Lichtwellenleiter weitere Zustandssignale aus, und/oder gibt die erste optische Einheit über elektrische oder optische Leitungen, vorzugsweise über Lichtwellenleiter zweite Zustandssignale und weitere Zustandssignale aus.

Die erste optische Einheit kommuniziert Zustandssignale über kostengünstige elektrische oder optische Leitungen mit einer externen Auswertungseinheit. Aus Gründen der Störsicherheit können die Zustandssignale über Lichtwellenleiter störfest kommuniziert werden, was die Feldtauglichkeit erhöht.

Vorteilhafterweise bilden die Austrittstelle, die Eintrittstelle und Spiegel zur Strahlführung an der Plattform eine zweite optische Einheit; und die Laserquelle und der Laserdetektor bilden an einer weiteren Basis eine plattformferne optische Einheit.

Somit sind nur die Austrittstelle, die Eintrittstelle und die Spiegel funktional und räumlich gruppiert in einer zweiten optischen Einheit an der Plattform angeordnet, während die Laserquelle und der Laserdetektor an einer weiteren Basis eine plattformferne optische Einheit bilden. Die Plattform muss somit nicht mehr, wie der Drehkörper des Standes der Technik, zusätzlich zur Aufnahme eines zweiten Drehantriebs samt einer mit dem zweiten Drehantrieb wirkverbundenen Drehlagerung, ausgelegt sein. Die Plattform kann in Leichtbauweise gebaut sein und kleine räumliche Abmessungen aufweisen. Dadurch wird nicht nur die Bauweise des Laserscanners vereinfacht und seine räumlichen Abmessungen werden verringert, auch das Gewicht des Laserscanners wird erniedrigt.

Weitere Vorteile und Merkmale der Erfindung sind aus der folgenden Beschreibung von derzeit bevorzugten Ausführungsformen im Zusammenhang mit den anhängenden Figuren beispielhaft ersichtlich. In den Figuren zeigt schematisch:
- Figur 1: einen Teil einer Ausführungsform eines Laserscanners mit parallel-kinematischem Antrieb mit horizontal ausgerichteter Plattform;
- Figur 2: einen Teil der Ausführungsform eines Laserscanners nach Figur 1 mit nach oben verschwenkter Plattform;
- Figur 3: einen Teil der Ausführungsform eines Laserscanners nach Figur 1 mit nach unten verschwenkter Plattform;
- Figur 4: einen Teil einer ersten Ausführungsform eines Laserscanners nach Figur 1 bis 3 mit Eintrittstelle, Austrittstelle und Spiegel auf der Plattform;
- Figur 5: einen Teil einer zweiten Ausführungsform eines Laserscanners nach Figur 1 bis 3 mit Eintrittstelle, Austrittstelle, Spiegel, Laserquelle und Laserdetektor auf der Plattform;
- Figur 6: einen Teil der Ausführungsform eines Laserscanners nach Figur 1 bis 4 mit Auswerteeinheit, elektrischer Stromversorgung und Stativ;
- Figur 7: einen Teil der Ausführungsform eines Laserscanners nach Figur 1 bis 3 und 5 mit Auswerteeinheit, elektrischer Stromversorgung und Stativ;
- Figur 8: einen Teil der Ausführungsform eines Laserscanners nach Figur 1 bis 3 mit Aufnehmer zur Erfassung der horizontal ausgerichteten Plattform;
- Figur 9: einen Teil der Ausführungsform eines Laserscanners nach Fig. 8 mit Aufnehmer zur Erfassung der nach oben verschwenkten Plattform;
- Figur 10: einen Teil einer ersten Ausführungsform eines parallel-kinematischem Antriebs nach Figur 1 bis 7 mit einem Linearaktor in unverschwenkter Stellung;
- Figur 11: einen Teil der Ausführungsform eines parallelkinematischem Antriebs nach Figur 10 mit einem Linearaktor in verschwenkter Stellung;
- Figur 12: einen Teil einer zweiten Ausführungsform eines parallel-kinematischem Antriebs nach Figur 1 bis 7 mit einem Rotationsaktor mit Gelenklager-Doppelarm in unverschwenkter Stellung;
- Figur 13: einen Teil der Ausführungsform eines parallelkinematischem Antriebs nach Figur 12 mit einem Rotationsaktor mit Gelenklager-Doppelarm in verschwenkter Stellung;
- Figur 14: einen Teil einer dritten Ausführungsform eines parallel-kinematischem Antriebs nach Figur 1 bis 7 mit einem Rotationsaktor mit GelenklagerEinfacharm in unverschwenkter Stellung;
- Figur 15: einen Teil der Ausführungsform eines parallelkinematischem Antriebs nach Figur 14 mit einem Rotationsaktor mit Gelenklager-Einfacharm in verschwenkter Stellung;
- Figur 16: einen Teil einer vierten Ausführungsform eines parallel-kinematischem Antriebs nach Figur 1 bis 7 mit einem Rotationsaktor mit Drehlager-Doppelarm in unverschwenkter Stellung;
- Figur 17: einen Teil der Ausführungsform eines parallelkinematischem Antriebs nach Figur 16 mit einem Rotationsaktor mit Drehlager-Doppelarm in verschwenkter Stellung;
- Figur 18: einen Teil einer fünften Ausführungsform eines parallel-kinematischem Antriebs nach Figur 1 bis 7 mit einem Rotationsaktor mit BiegeelementDoppelarm in unverschwenkter Stellung;
- Figur 19: einen Teil der Ausführungsform eines parallelkinematischem Antriebs nach Figur 18 mit einem Rotationsaktor mit Biegeelement-Doppelarm in verschwenkter Stellung;
- Figur 20: einen Teil einer fünften Ausführungsform eines parallel-kinematischem Antriebs nach Figur 1 bis 7 mit einem Stabilisator mit Gelenklager-Einfacharm in unverschwenkter Stellung;
- Figur 21: einen Teil der Ausführungsform eines parallelkinematischem Antriebs nach Figur 20 mit einem Stabilisator mit Gelenklager-Einfacharm in verschwenkter Stellung;
- Figur 22: einen Teil einer sechsten Ausführungsform eines parallel-kinematischem Antriebs nach Figur 1 bis 7 mit einem Stabilisator mit Biegeelement-Doppelarm in unverschwenkter Stellung; und
- Figur 23: einen Teil der Ausführungsform eines parallelkinematischem Antriebs nach Figur 22 mit einem Stabilisator mit Biegeelement-Doppelarm in verschwenkter Stellung.

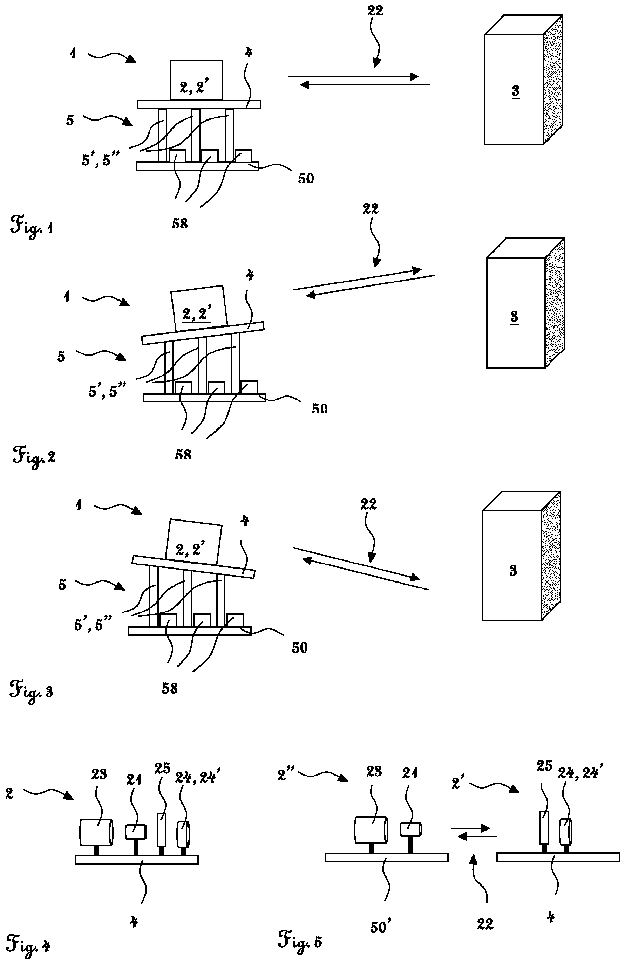

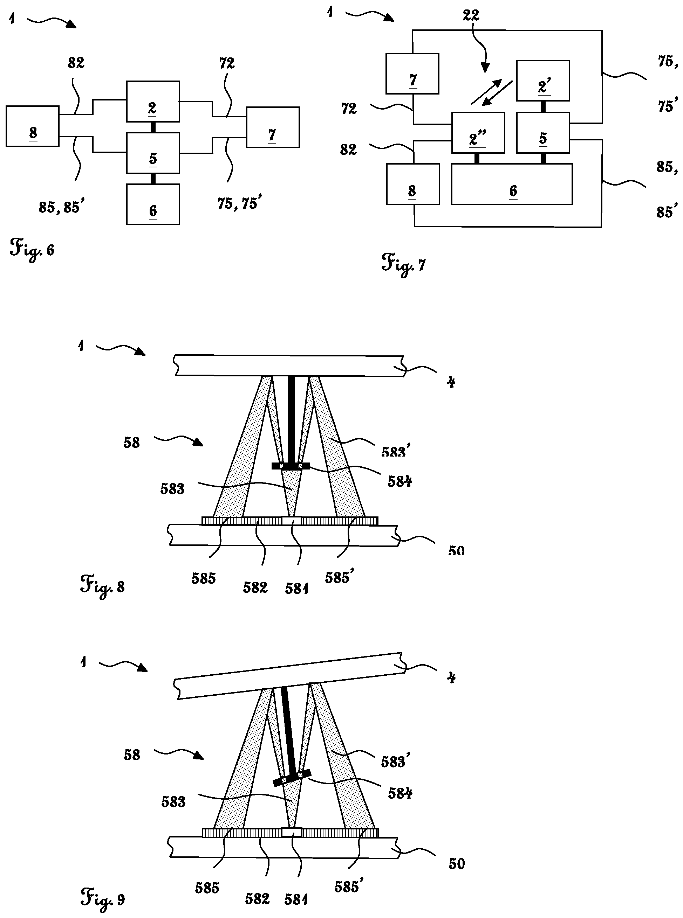

Die Figuren zeigen mehrere Ausführungsformen eines Laserscanners 1 mit parallel-kinematischem Antrieb 5. Gemäß der Figur 1 bis 3 erfasst der Laserscanner 1 mittels Scannen von Laserlicht 22 in Form eines gebündelten Laserstrahls mindestens eine Oberfläche eines entferntes Objekts 3 in zwei Dimensionen (2D) oder in drei Dimensionen (3D) nach Raumkoordinaten der Winkelkoordinaten. Das Objekt 3 kann beliebige Größe, Form und Gestalt aufweisen. Die Entfernung zwischen dem Laserscanner 1 und dem Objekt 3 liegt im Bereich von 0,1 bis 100m, vorzugsweise ein bis 1200m. Der Laserscanner 1 ist wie in den Figur 6 und 7 gezeigt, auf einem Stativ 6 am Objekt 3 platzierbar, auch weist der Laserscanner 1 eine Auswertungseinheit 7 und eine elektrische Stromversorgung 8 auf. Die Verwendung eines Stativs ist jedoch nicht zwingend für den Betrieb des Laserscanners 1. Das Gewicht des Laserscanners 1 beträgt weniger als 10kg, vorzugsweise weniger als 3.0kg, vorzugsweise weniger als 0.3kg, vorzugsweise weniger als 0.1kg; und dies ohne Auswertungseinheit 7, ohne elektrische Stromversorgung 8 und ohne Stativ 6.

Der Laserscanner 1 weist mehrere Ausführungsformen einer optischen Einheit 2, 2', 2'' auf, die in den Figuren 1 bis 7 gezeigt sind. Eine erste optische Einheit 2 umfasst eine Laserquelle 21 zur Erzeugung von Laserlicht 22, ein Laserdetektor 23 zum Empfang von Laserlicht 22, eine Austrittstelle 24 für den auf einen jeweiligen Punkt der Oberfläche gerichteten Austritt von Laserlicht 22 aus dem Laserscanner 1, eine Eintrittstelle 24' für den Eintritt von an dem jeweiligen Punkt der Oberfläche gestreutem Laserlicht 22 in den Laserscanner 1 und Spiegel 25 zur Strahlführung des Laserlichts 22. Eine zweite optische Einheit 2' umfasst die Austrittstelle 24, die Eintrittstelle 24' und die Spiegel 25. Eine plattformferne optische Einheit 2'' umfasst die Laserquelle 21 und den Laserdetektor 23. Die erste optische Einheit 2 und die zweite optische Einheit 2 sind jeweils an einer Plattform 4 angeordnet; die plattformferne optische Einheit 2'' ist an einer weiteren Basis 50' angeordnet. Gemäß der Figuren 1 bis 4 und 6 sind die erste optische Einheit 2 und die zweite optische Einheit 2' über die Plattform 4 und den parallel-kinematischen Antrieb 5 am Stativ 6 angeordnet. Gemäß der Figuren 5 und 7 ist die plattformferne optische Einheit 2'' über die weitere Basis 50' am Stativ 6 angeordnet.

Die Laserquelle 21 ist ein Laser mit gepulstem oder kontinuierlichem Laserlicht 22. So ist die Laserquelle 21 ein gepulster Laser mit Laserlicht 22 von einer Wellenlänge von 532nm, 905nm, usw. Auch kann die Laserquelle 21 ein kontinuierlicher Laser mit Laserlicht 22 von einer Wellenlänge von 635nm, 650nm, usw. sein. Bei Kenntnis der vorliegenden Erfindung kann der Fachmann an Stelle von Laserlicht auch elektromagnetische Wellen wie Radiowellen, Mikrowellen, sichtbares Licht, Röntgenstahlung, Gammastrahlung, usw. verwenden. Von der Laserquelle 21 erzeugtes Laserlicht 22 wird über Spiegel 25 zur Austrittstelle 24 geführt. Die Spiegel 25 sind Planspiegel, die Spiegel 25 können teildurchlässig sein. Die Austrittstelle 24 und die Eintrittstelle 24' bestehen aus einer oder aus mehreren optischen Linse/n von 30 bis 80mm Brennweite. Von Streupunkten des Objektes 3 gestreutes Laserlicht 22 wird über Spiegel 25 zum Laserdetektor 23 geführt. Mit dem Begriff "Streuung" wird eine Ablenkung von Laserlicht 22 durch Wechselwirkung mit dem Objekt 3 verstanden. Lokal erfolgt diese Wechselwirkung an einem Streupunkt des Objekts 3. Der Streupunkt kann ein natürlicher Festkörperbestandteil des Objekts 3 sein oder aber auch eine für den Betrieb des Verfahrens temporär am Objekt 3 angebrachte, reflektierende Zielmarke. Der Laserscanner 1 kann eine Phasenverschiebung oder eine Pulslaufzeitdifferenz zwischen dem erzeugten Laserlicht 22 und dem gestreuten Laserlicht 22 messen.

Der Laserscanner 1 weist eine Entfernungsmess-Funktionalität zur Bestimmung von einer jeweiligen Entfernung zu dem jeweiligen Punkt der Oberfläche basierend auf an dem jeweiligen Punkt der Oberfläche gestreutem und durch den Laserdetektor 23 empfangenem Laserlicht 22 und Mittel zur Erfassung von einer jeweiligen Raumrichtung zu dem jeweiligen Punkt der Oberfläche auf, insbesondere wobei die Mittel einen oder mehrere Aufnehmer 58 zur Ermittlung von einer jeweiligen Schwenkstellung der Plattform 4 gegenüber der Basis 50 aufweisen.

Der Laserdetektor 23 ist ein Sensor mit einem Register von Photodioden, wie ein Charge-Coupled Device (CCD), ein Complementary Metal Oxide Semiconductor (CMOS), usw.. Zusätzlich zum Sensor kann der Laserdetektor 23 eine CCD-Kamera mit 2 bis 20Mpx Auflösung aufweisen. Die Kamera kann das Objekt 3 abbilden, sie kann in die Abbildung des Objekts 3 zoomen und Ausschnitte des Objekts 3 vergrößern, auf die der Laserscanner 1 ausrichtbar ist. Der Laserdetektor 23 erfasst die Textur des Objekts 3 bei einer Einzelmessung über eine Entfernung von ein bis 50m mit einer Lagegenauigkeit von +/-6mm und mit einer Streckengenauigkeit von +/-4mm. Die Laserquelle 21 und der Laserdetektor 23 geben für erzeugtes und empfangenes Laserlicht 22 über elektrische oder optische Leitungen wie Lichtwellenleiter weitere Zustandssignale 72 aus. Laserquelle 21 und Laserdetektor 23 werden von der elektrischen Stromversorgung 8 über elektrische oder optische Leitungen mit weiterem elektrischen Strom 82 versorgt.

Der Laserscanner 1 kann somit ein elektrooptischer Distanzmesser (EDM) sein, wie sie als Module unter anderem in den von der Anmelderin vertriebenen Produkten mit der Bezeichnung Disto D2, Disto D5, Disto D8 oder 3D Disto, Viva TS15, HDS 6200 verbaut sind. Bei diesen EDM-Modulen kann es sich um heute übliche Phasenmesser oder um Distanzmesser mit Waveform Digitizer (WFD)-Technologie handeln. Die erzielbaren Lage- und Streckengenauigkeiten und Messraten sind auch von der verwendeten Sendeleistung und Empfangsoptik abhängig. Mit heutiger Technologie erzielen solche EDM-Module Lage- und Streckengenauigkeiten im mm-Bereich und Scanngeschwindigkeiten (Messraten) im 100Hz und kHz-Bereich. Das Gewicht solcher EDM-Module beträgt lediglich 30g bis 50g; die räumlichen Abmessungen dieser EDM-Module betragen 2x3x4cm³ für Phasenmesser und 2x4x6cm³ für WFD-Distanzmesser.

Gemäß der Figur 1 bis 3 sind Aktoren 5' und Stabilisatoren 5'' des parallel-kinematischen Antriebs 5 an der Plattform 4 des Laserscanners 1 angeordnet und wirken direkt auf die Plattform 4. Die Plattform 4 wird vom parallel-kinematischen Antrieb 5 bezüglich einer Basis 50 verschwenkt. Das Verschwenken der Plattform 4 erfolgt mit weitgehend gleicher Scanngeschwindigkeit in horizontaler Richtung und in vertikaler Richtung. Der Begriff "weitgehend" wird im Sinne von >=90% verwendet, d.h. Abweichungen von 10% bei den Scanngeschwindigkeiten sind möglich. Der parallel-kinematische Antrieb 5 weist eine Steuereinheit zum Stellen der Aktoren 5' auf, welche Steuereinheit für jedes Stellen der Aktoren 5' über elektrische oder optische Leitungen ein erstes Zustandssignal 75 ausgibt. Das Verschwenken der Plattform 4 bezüglich der Basis 50 kann von einem Aufnehmer 58 mit Aufnehmersignalen 59 ermittelt werden. Auch der Aufnehmer 58 weist eine Steuereinheit auf, welche Steuereinheit für jedes erfasste Verschwenken der Plattform 4 über elektrische oder optische Leitungen ein zweites Zustandssignal 75' ausgibt. Vorteilhafterweise ist ein Aufnehmer 58 einem Aktor 5' oder Stabilisator 5'' zugeordnet, welcher Aufnehmer 58 das Verschwenken der Plattform 4 bezüglich der Basis 50 im Bereich des ihm zugeordneten Aktors 5' oder Stabilisators 5'' ermittelt. Die Aktoren 5' und der Aufnehmer 58 werden von der elektrischen Stromversorgung 8 über elektrische oder optische Leitungen mit elektrischen Strom 85, 85' versorgt.

Der Aufnehmer 58 arbeitet berührungslos und ist an der Basis 50 angeordnet. Ein Vielzahl von Ausführungsformen von Aufnehmern 58 lassen sich realisieren, die Figuren 8 und 9 zeigen dazu eine beispielhafte Ausführungsform. Der Aufnehmer 58 weist einen optischen Sender 581 wie eine Licht emittierende Diode (LED), eine Laserdiode, usw. und einen optischen Sensor 582 wie eine ein- oder zweidimensionale Photozellenanordnung auf. Ein vom optischen Sender 581 ausgesendeter Lichtpunkt 583 wird von der Plattform 4 reflektiert und vom optischen Sensor 582 erfasst. Bei unverschwenkter Plattform 4 nach Figur 8 erfasst der optische Sensor 582 den gestreuten Lichtpunkt in einem Referenzpunkt der Photozellenanordnung. Bei verschwenkter Plattform 4 nach Figur 9 erfasst der optische Sensor 582 den gestreuten Lichtpunkt in einem Signalpunkt, der je nach Größe und Richtung des Verschwenkens vom Referenzpunkt entfernt ist. Der vom optischen Sensor 581 ausgesendete Lichtpunkt 583 kann eine optische Maske 584 beleuchten und ein Maskenmuster 583' mit mehreren Punkten oder Strichen erzeugen, welches Maskenmuster 583' von der Plattform 4 reflektiert und vom optischen Sensor 582 erfasst wird. Die optische Maske 584 ist an der Plattform 4 angeordnet und wird zusammen mit der Plattform 4 verschwenkt. Bei unverschwenkter Plattform 4 nach Figur 8 erfasst der optische Sensor 582 das Maskenmuster 583' in einem Referenzmuster 585, 585' der Photozellenanordnung. Bei verschwenkter Plattform 4 nach Figur 9 erfasst der optische Sensor 582 das Maskenmuster 583' in einem Signalmuster 585, 585', der je nach Größe und Richtung des Verschwenkens vom Referenzmuster 585, 585' unterscheidet. Im Vergleich der Figuren 8 und 9 ist der linke Ast des reflektierten Maskenmusters 583' durch das Verschwenken der Plattform 4 nach oben ein schmaleres Signalmuster 585 liefert, während der rechte Ast des reflektierten Maskenmusters 583' durch das Verschwenken der Plattform 4 nach oben ein breiteres Signalmuster 585' liefert. Jedem Referenzpunkt oder Referenzmuster ist das Verschwenken der Plattform 4 mit einer Genauigkeit von +/-5µm, vorzugsweise +/-1µm eindeutig zuzuordnen. Bei Kenntnis der vorliegenden Erfindung kann der Fachmann die Photozellenanordnung auch auf der Plattform 4 anbringen und dort den nicht reflektierten Lichtpunkt 583 oder das nicht reflektierte Maskenmuster 583' erfassen.

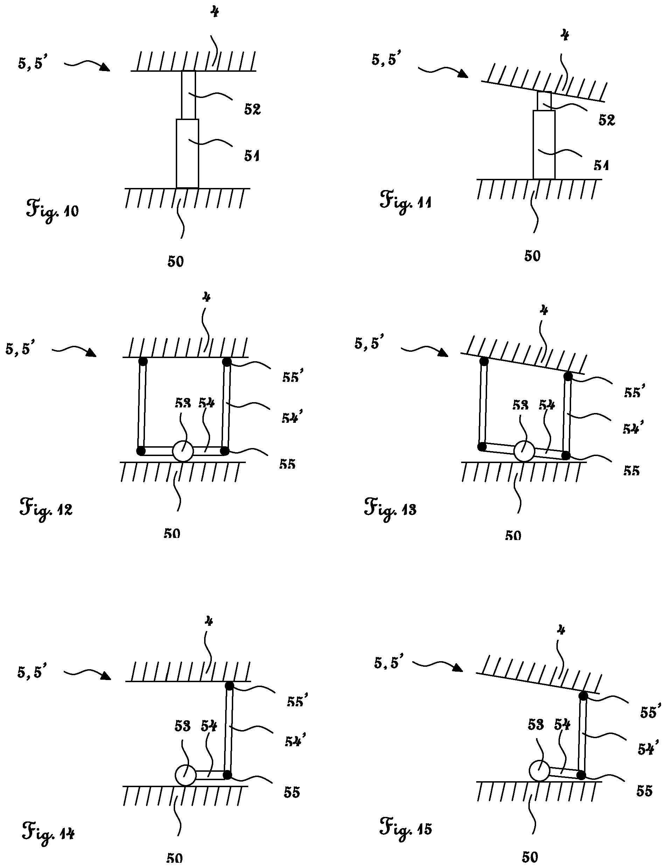

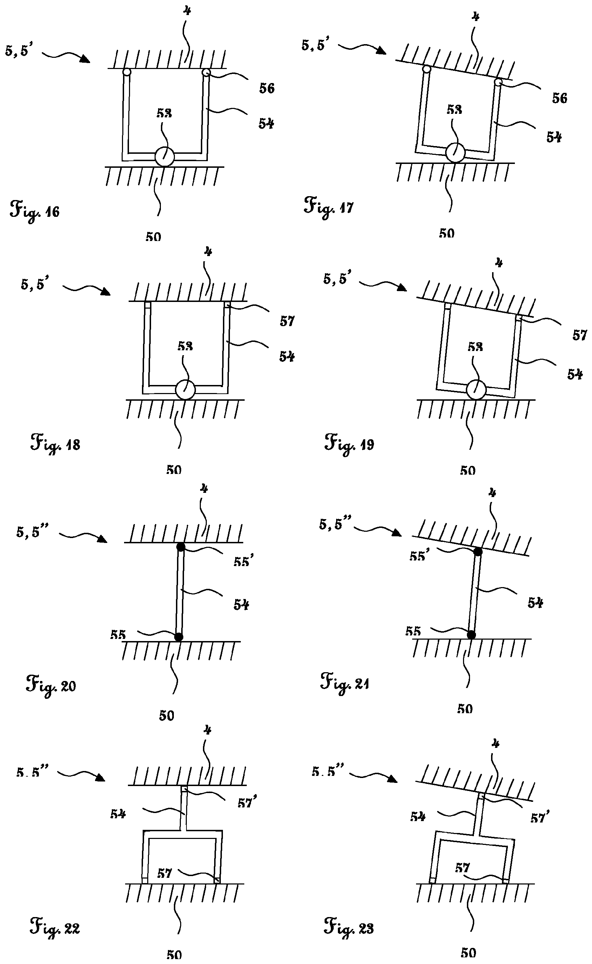

Mehrere Ausführungsformen von Aktoren 5' und Stabilisatoren 5'' sind in den Figur 10 bis 23 gezeigt. Die Aktoren 5' und Stabilisatoren 5'' sind in einer Antriebsebene zwischen Plattform 4 und Basis 50 angeordnet. Aktoren 5' sind aktive Stellglieder, Stabilisatoren 5'' sind passive Stellglieder. Jeder Aktor 5' ist entweder ein Linearaktor oder ein Rotationsaktor. Die Figuren 10 und 11 zeigen einen Linearaktor mit einem Linearantrieb 51 und einem vom Linearantrieb bewegten ein- und ausfahrbaren Stempel 52. Die Figuren 12 bis 19 zeigen verschiedene Ausführungsformen eines Rotationsaktors mit einem Drehantrieb 53, einem Dreharm 54, 54' und einer Lager 55 bis 57'. Gemäß der Figur 12 und 13 weist der Rotationsaktor einen Drehantrieb 53 mit Gelenklager-Doppelarm 54, 54', 55, 55' auf; gemäß der Figur 14 und 15 weist der Rotationsaktor einen Drehantrieb 53 mit Gelenklager-Einfacharm 54, 54', 55, 55' auf; gemäß der Figur 16 und 17 weist der Rotationsaktor einen Drehantrieb 53 mit Drehlager-Doppelarm 54, 56 auf; gemäß der Figur 18 und 19 weist der Rotationsaktor einen Drehantrieb 53 mit Biegeelement-Doppelarm 54, 57 auf; gemäß der Figur 20 und 21 weist der Stabilisator 5'' Gelenklager-Einfacharm 54, 55, 55' auf; gemäß der Figur 22 und 23 weist der Stabilisator 5'' einen Biegeelement-Doppelarm 54, 57, 57' auf. Die verschiedenen Ausführungsformen von Aktoren 5' und Stabilisatoren 5'' weisen unterschiedliche und gezielt einstellbare Steifigkeitscharakteristika und Dämpfungscharakteristika auf.

Das Lager 55 bis 57' ist entweder ein Gelenklager 55, 55' oder ein Drehlager 56 oder ein Biegeelement 57, 57'. Hierbei handelt es sich um ein handelsübliches, dem Fachmann bekanntes Lager 55 bis 57'. Das Gelenklager 55, 55' ist ein Lager für dreidimensionale Einstellbewegungen mit zwei Freiheitsgraden wie ein Radial-, Schräg- oder Axiallager. Das Drehlager 56 ist ein Lager für zweidimensionale Einstellbewegungen mit einem Freiheitsgrad wie ein Radial- oder Schräglager. Das Gelenklager 55, 55' und das Drehlager 56 können sowohl ein Gleitlager als auch ein Wälzlager sein. Das Gelenklager 55, 55' und das Drehlager 56 können aus metallischen Innen- und Außenringen mit wartungsfreien Gleitschichten aus Polytetrafluoräthylen (PTFE) oder aus Wellen- und Gehäusescheiben mit PTFE-Gleitschichten bestehen. Das Biegeelement 57, 57' kann ein Lager für zweidimensionale Einstellbewegungen mit einem Freiheitsgrad wie ein Filmscharnier, Bandscharnier, Folienscharnier, usw. aus Polypropylen (PP), glasverstärkten PP, usw. sein. Solch ein Biegeelement 57, 57' weist eine dünnwandige, falzartige Verbindung auf, die durch ihre Biegsamkeit eine begrenzte Einstellbewegung über einen Winkel von +/-10°, vorzugsweise +/-15° ermöglicht. Das Biegeelement 57, 57' kann auch eine Spiralfeder, Stabfeder, usw. aus Metall, Elastomer, Gummi, usw. sein. Bei Kenntnis der vorliegenden Erfindung kann der Fachmann auch andere Lager wie Magnetlager, Tauchspulen, Gleitlager, usw. verwenden.

Der parallel-kinematische Antrieb 5 weist in einer Antriebsebene mindestens zwei Aktoren 5' auf und kann mindestens einen Stabilisator 5'' aufweisen. So lassen sich zwei Aktoren 5' und ein Stabilisator 5'' zu einem Dreibein anordnen, oder drei Aktoren 5' und zwei Stabilisatoren 5'' lassen sich zu einem Fünfbein anordnen, oder sechs Aktoren 5' lassen sich zu einem Sechsbein anordnen, oder fünf Aktoren 5' und drei Stabilisatoren 5'' lassen sich zu einem Achtbein anordnen. Diese Anordnungen von Aktoren 5' und Stabilisatoren 5'' können symmetrisch oder asymmetrisch sein. Symmetrisch heißt, dass jeder der Aktoren 5' und Stabilisatoren 5'' im gleichen Abstand zueinander und zu einem Fixpunkt der Plattform 4 angeordnet ist, welcher Fixpunkt der Mittelpunkt einer mehreckigen oder kreissymmetrischen Plattform 4 sein kann; asymmetrisch heißt, dass keine solche symmetrische Anordnung vorliegt.

Der parallel-kinematischen Antrieb 5 kann einen Beschleunigungssensor oder Geschwindigkeitssensor zur Erfassung von Vibrationen an der Plattform 4 aufweisen. Der Beschleunigungssensor oder Geschwindigkeitssensor kann temporär oder permanent am parallel-kinematischen Antrieb 5 angeordnet sein. Bei einer temporären Anordnung des Beschleunigungssensors oder Geschwindigkeitssensors am parallel-kinematischen Antrieb 5 erfolgt in einem Eichvorgang eine Einstellung der Dämpfungscharakteristika und Steifigkeitscharakteristika eines Stabilisators 5'' zur Dämpfung von Vibrationen an der Plattform 4. Bei einer permanenten Anordnung des Beschleunigungssensors oder Geschwindigkeitssensors am parallel-kinematischen Antrieb 5 erfolgt in einem Steuervorgang ein Stellen der Dämpfungscharakteristika und Steifigkeitscharakteristika eines Aktors 5' zur Dämpfung von Vibrationen an der Plattform 4. Messsignale des Beschleunigungssensors oder Geschwindigkeitssensors werden an die Steuereinheit des Aktors 5' übermittelt, welche Steuereinheit Dämpfungscharakteristika und Steifigkeitscharakteristika des Aktors 5' zur Dämpfung von Vibrationen an der Plattform 4 gezielt einstellt.

Die Auswertungseinheit 7 empfängt vom parallel-kinematischen Antrieb 5 erste Zustandssignale 75; sie empfängt vom Aufnehmer 58 zweite Zustandssignale 75'; und sie empfängt von der Laserquelle 21 und vom Laserdetektor 23 weitere Zustandssignale 72. Die Kommunikation der Zustandssignale 75, 75', 75'' kann kabelgestützt oder funkgestützt oder durch physischen Datentransport erfolgen. Bei kabelgestützter oder funkgestützter Datenkommunikation wird ein Protokoll wie das Transmission Control Protocol/Internet-Protokoll (TCP/IP) verwendet. Bei physischem Datentransport wird ein mobiler computerlesbarer Datenspeicher wie ein Universal Serial Bus (USB) Datenspeicher transportiert. Kabelgestützte Datenkommunikation erfolgt über einen Datenbus wie Ethernet, USB, usw.. Funkgestützte Datenkommunikation erfolgt über ein Funknetz wie Enhanced Data Rate for GSM Evolution (EDGE), Asymetric Digital Subscriber Line (ADSL), Institute of Electrical and Electronics Engineers (IEEE) 802.11, usw.. Sowohl der Laserscanner 1 als auch die Auswertungseinheit 7 weisen entsprechende Schnittstellen für die Kommunikation auf. Bei Kenntnis der vorliegenden Erfindung kann der Fachmann auch den Laserscanner mit im Gehäuse integrierter Auswertungseinheit als eine einzige Einheit ausführen.

Diese Zustandssignale 75, 75', 72 bilden Tupel und geben für jeden erzeugten und empfangenen Laserpuls eine entsprechende Stellung der Aktoren 5' und ein entsprechend erfasstes Verschwenken der Plattform 4 an. Die Auswertungseinheit 7 ermittelt aus diesen Zustandssignalen 75, 75', 72 Entfernungswerte zwischen dem Laserscanner 1 und Streupunkten des Objekts 3. Die Entfernungswerte umfassen einen Abstand r und einen oder mehrere Winkel θ, ϕ, wie einen Azimutswinkel θ und einen Polarwinkel ϕ zwischen dem Laserscanner 1 und dem abgetasteten Streupunkt des Objekts 3. Vorzugsweise ermittelt die Auswertungseinheit 7 aus einer Vielzahl von mehreren Tausend Zustandssignalen 75, 75', 72 eine Vielzahl von mehreren Tausend Entfernungswerten. Das Objekt 3 wird über diese Entfernungswerte zwei- oder dreidimensional erfasst. Die Entfernungswerte lassen sich auf einem Datenspeicher digital speichern und auf einem Bildschirm graphisch darstellen.

Es versteht sich, dass diese dargestellten Figuren nur mögliche Ausführungsformen schematisch darstellen. Die verschiedenen Ansätze können ebenso miteinander sowie mit Verfahren und Geräten des Standes der Technik kombiniert werden. Auch sind kinematische Umkehrungen und Drehungen der Bestandteile möglich. So kann der Fachmann die relative Lage von Plattform 4 und Basis 50 umkehren oder drehen, derart, dass nicht die Plattform 5 oberhalb der Basis 50 zu liegen kommt, wie in den Figuren dargestellt, sondern dass die Basis 50 oberhalb der Plattform 4 oder in der gleichen horizontalen Ebene zu liegen kommt. In gleicher Weise kann der Fachmann den Aufnehmer 58 anstatt an der Basis 50, wie in den Figuren dargestellt, an der Plattform 4 anordnen.

## Patentansprüche

1. Laserscanner (1) zur Vermessung von einer Oberfläche von Räumen und/oder Objekten (3) und zur Erzeugung von einer die Oberfläche koordinativ wiedergebenden Punktwolke, mit
- einer Laserquelle (21) zur Erzeugung von Laserlicht (22) und einem Laserdetektor (23) zum Empfang von Laserlicht (22) der Laserquelle (21),
- einer gegenüber einer stationären Basis (50) des Laserscanners (1) scannend verschwenkbaren Plattform (4), wobei an der Plattform (4) angeordnet sind
o eine Austrittstelle (24) für den auf einen jeweiligen Punkt der Oberfläche gerichteten Austritt von erzeugtem Laserlicht (22) in Form eines gebündelten Laserstrahls und
o eine Eintrittstelle (24') für den Eintritt von an dem jeweiligen Punkt der Oberfläche gestreutem Laserlicht (22),
- einer Entfernungsmess-Funktionalität zur Bestimmung von einer jeweiligen Entfernung zu dem jeweiligen Punkt der Oberfläche basierend auf an dem jeweiligen Punkt der Oberfläche gestreutem und durch den Laserdetektor (23) empfangenem Laserlicht (22) und
- Mitteln zur Erfassung von einer jeweiligen Raumrichtung zu dem jeweiligen Punkt der Oberfläche, insbesondere wobei die Mittel einen oder mehrere Aufnehmer (58) zur Ermittlung von einer jeweiligen Schwenkstellung der Plattform (4) gegenüber der Basis (50) aufweisen, wobei
ein parallel-kinematischer Antrieb (5) die Plattform (4) gegenüber der Basis verschwenkt zum Scannen des Laserstrahls über eine Vielzahl von Punkten der Oberfläche, und
der parallel-kinematische Antrieb (5) mehrere Aktoren (5') aufweist, die in einer Antriebsebene an der Plattform (4) angeordnet sind, und von denen jeder direkt auf die Plattform (4) wirkt, und vorzugsweise der parallel-kinematische Antrieb (5) für jedes Stellen eines Aktors (5') ein erstes Zustandssignal (75) ausgibt, und die Aktoren (5') an der Basis (50) angebracht sind und zumindest einen Teil der Last der Plattform (4) in die Basis (50) leiten, **dadurch gekennzeichnet, dass** die Aktoren (5') so ausgebildet sind, dass sie zumindest einen Teil der Vibrationen des parallel-kinematischen Antriebs (5) dämpfen.

2. Laserscanner (1) nach Anspruch 1, **dadurch gekennzeichnet,**
**dass** der parallel-kinematische Antrieb (5) die Plattform (4) mit weitgehend gleicher Scanngeschwindigkeit in horizontaler Richtung und in vertikaler Richtung verschwenkt.

3. Laserscanner (1) nach einem der Ansprüche 1 oder 2, **dadurch gekennzeichnet,**
**dass** der parallel-kinematische Antrieb (5) mindestens zwei Aktoren (5') aufweist; und
**dass** jeder der Aktoren (5') entweder ein Linearaktor oder ein Rotationsaktor ist.

4. Laserscanner (1) nach Anspruch 3, wobei mindestens einer der Aktoren (5') ein Rotationsaktor ist, **dadurch gekennzeichnet,**
**dass** der Rotationsaktor einen Drehantrieb (53), einen Dreharm (54, 54') und ein Lager (55 bis 57') aufweist.

5. Laserscanner (1) nach einem der Ansprüche 1 bis 4, **dadurch gekennzeichnet,**
**dass** der parallel-kinematische Antrieb (5) einen Stabilisator (5'') aufweist;
**dass** der Stabilisator (5'') mit einem ersten Lager (55 bis 57') direkt an der Plattform (4) angebracht ist;
**dass** der Stabilisator (5'') mit einem weiteren Lager (55 bis 57') direkt an einer Basis (50) angebracht ist;
**dass** diese Lager (55 bis 57') über einen Gelenkarm (54) mechanisch miteinander verbunden sind; und
**dass** der Stabilisator (5'') zumindest einen Teil der Last der Plattform (4) in die Basis (50) leitet.

6. Laserscanner (1) nach Anspruch 5 , **dadurch gekennzeichnet,**
**dass** der Stabilisator (5") zumindest einen Teil der Vibrationen des parallel-kinematischen Antriebs (5) dämpft.

7. Laserscanner (1) nach einem der Ansprüche 4 oder 5, **dadurch gekennzeichnet,**
**dass** das Lager (55 bis 57') entweder ein Gelenklager (55, 55') oder ein Drehlager (56) oder ein Biegeelement (57, 57') ist.

8. Laserscanner (1) nach einem der Ansprüche 1 bis 7, wobei die Mittel einen Aufnehmer (58) zur Ermittlung des Verschwenkens der Plattform (4) bezüglich der Basis (50) aufweisen, **dadurch gekennzeichnet,**
**dass** der Aufnehmer (58) für jedes erfasste Verschwenken der Plattform (4) bezüglich der Basis (50) ein zweites Zustandssignal (75') hinsichtlich den jeweiligen Schwenkstellungen der Plattform (4) gegenüber der Basis ausgibt.

9. Laserscanner (1) nach Anspruch 8, **dadurch gekennzeichnet,**
**dass** ein Aufnehmer (58) einem Aktor (5') zugeordnet ist, welcher Aufnehmer (58) das Verschwenken der Plattform (4) bezüglich der Basis (50) im Bereich des ihm zugeordneten Aktors (5') ermittelt und/oder
**dass** einem Stabilisator (5'') ein Aufnehmer (58) zugeordnet ist, welcher Aufnehmer (58) das Verschwenken der Plattform (4) bezüglich der Basis (50) im Bereich des ihm zugeordneten Stabilisators (5") ermittelt.

10. Laserscanner (1) nach einem der Ansprüche 1 bis 9, **dadurch gekennzeichnet,**
**dass** die Laserquelle (21), der Laserdetektor (23), die Austrittstelle (24), die Eintrittstelle (24') und Spiegel (25) zur Strahlführung an der Plattform (4) eine erste optische Einheit (2) bilden.

11. Laserscanner (1) nach Anspruch 10, **dadurch gekennzeichnet,**
**dass** die erste optische Einheit (2) über elektrische oder optische Leitungen, vorzugsweise über Lichtwellenleiter weitere Zustandssignale (72) ausgibt, und/oder
**dass** die erste optische Einheit (2) über elektrische oder optische Leitungen, vorzugsweise über Lichtwellenleiter zweite Zustandssignale (75') und weitere Zustandssignale (72) ausgibt.

12. Laserscanner (1) nach einem der Ansprüche 1 bis 9, **dadurch gekennzeichnet,**
**dass** die Austrittstelle (24), die Eintrittstelle (24') und Spiegel (25) zur Strahlführung an der Plattform (4) eine zweite optische Einheit (2') bilden; und
**dass** die Laserquelle (21) und der Laserdetektor (23) an einer weiteren Basis (50') eine plattformferne optische Einheit (2") bilden.

13. Verfahren zum Betrieb eines Laserscanners (1) nach einem der Patentansprüche 1 bis 12, wobei der parallel-kinematische Antrieb (5) an der Plattform (4) angebracht ist, **dadurch gekennzeichnet,**
**dass** vom parallel-kinematischen Antrieb (5) erste Zustandssignale (75) an eine Auswertungseinheit (7) übermittelt werden;
**dass** vom Aufnehmer (58) zweite Zustandssignale (75') an die Auswertungseinheit (7) übermittelt werden;
**dass** von der Laserquelle (21) und vom Laserdetektor (23) weitere Zustandssignale (72) an die Auswertungseinheit (7) übermittelt werden; und
**dass** von der Auswertungseinheit (7) aus den ersten Zustandssignalen (75), den zweiten Zustandssignalen (75') und den weiteren Zustandssignalen (72) Entfernungswerte zwischen dem Laserscanner (1) und Streupunkten des Objekts (3) ermittelt werden.

## Claims

1. A laser scanner (1) for measuring a surface of spaces and/or objects (3) and for generating a point cloud coordinately reproducing the surface, with
- a laser source (21) for generating laser light (22) and a laser detector (23) for receiving laser light (22) from the laser source (21),
- a platform (4) which can be pivoted in relation to a stationary base (50) of the laser scanner (1) in a scanning manner, wherein, arranged on the platform (4), there is
o an exit point (24) for the exit of generated laser light (22) in the form of a focused laser beam, directed on a respective point on the surface, and
o an entry point (24') for the entry of laser light (22) scattered at the respective point on the surface,
- a distance measurement functionality for determining a respective distance to the respective point on the surface on the basis of laser light (22) scattered at the respective point on the surface and received by the laser detector (23) and
- means for capturing a respective spatial direction to the respective point on the surface, in particular wherein the means have one or more pickups (58) for establishing a respective pivot position of the platform (4) in relation to the base (50),
wherein
a parallel kinematic drive (5) pivots the platform (4) in relation to the base for scanning the laser beam over a multiplicity of points on the surface, and
the parallel kinematic drive (5) has a plurality of actuators (5'), which are arranged in a drive plane on the platform (4), and of which each acts directly on the platform (4), and
preferably, the parallel kinematic drive (5) emits a first state signal (75) for each setting of an actuator (5'), and
the actuators (5') are attached to the base (50) and direct at least part of the load of the platform (4) into the base (50),
**characterized in that** the actuators (5') are configured in such a way that they damp at least part of the vibrations of the parallel kinematic drive (5).

2. The laser scanner (1) as claimed in claim 1, **characterized**
**in that** the parallel kinematic drive (5) pivots the platform (4) with largely the same scanning speed in the horizontal direction and in the vertical direction.

3. The laser scanner (1) as claimed in claim 1 or 2, **characterized**
**in that** the parallel kinematic drive (5) has at least two actuators (5'); and
**in that** each actuator (5') is either a linear actuator or a rotational actuator.

4. The laser scanner (1) as claimed in claim 3, wherein at least one of the actuators (5') is a rotational actuator, **characterized**
**in that** the rotational actuator has a rotational drive (53), a rotatable arm (54, 54') and a bearing (55 to 57').

5. The laser scanner (1) as claimed in any one of claims 1 to 4, **characterized**
**in that** the parallel kinematic drive (5) has a stabilizer (5");
**in that** the stabilizer (5") is attached directly to the platform (4) by means of a first bearing (55 to 57');
**in that** the stabilizer (5") is attached directly to a base (50) by means of a further bearing (55 to 57');
**in that** these bearings (55 to 57') are mechanically connected to one another by means of a hinged arm (54); and
**in that** the stabilizer (5") directs at least part of the load of the platform (4) into the base (50).

6. The laser scanner (1) as claimed in claim 5, **characterized**
**in that** the stabilizer (5") damps at least part of the vibrations of the parallel kinematic drive (5).

7. The laser scanner (1) as claimed in any one of claims 4 or 5, **characterized**
**in that** the bearing (55 to 57') is a hinge bearing (55, 55') or a pivot bearing (56) or a flexural element (57, 57').

8. The laser scanner (1) as claimed in any one of claims 1 to 7, wherein the means have a pickup (58) for establishing the pivoting of the platform (4) in relation to the base (50), **characterized in that**, for each captured pivoting of the platform (4) in relation to the base (50), the pickup (58) outputs a second state signal (75') in respect of the respective pivot positions of the platform (4) with respect to the base (50).

9. The laser scanner (1) as claimed in claim 8, **characterized**
**in that** a pickup (58) is assigned to an actuator (5'), which pickup (58) establishes the pivoting of the platform (4) in relation to the base (50) in the region of the actuator (5') assigned thereto and/or
**in that** a pickup (58) is assigned to a stabilizer (5"), which pickup (58) establishes the pivoting of the platform (4) in relation to the base (50) in the region of the stabilizer (5") assigned thereto.

10. The laser scanner (1) as claimed in any one of claims 1 to 9, **characterized**
**in that** the laser source (21), the laser detector (23), the exit point (24), the entry point (24') and mirrors (25) for beam guidance form a first optical unit (2) on the platform (4).

11. The laser scanner (1) as claimed in claim 10, **characterized**
**in that** the first optical unit (2) emits further state signals (72) via electrical or optical lines, preferably via optical waveguides, and/or in that the first optical unit (2) emits second state signals (75') and further state signals (72) via electrical or optical lines, preferably via optical waveguides.

12. The laser scanner (1) as claimed in any one of claims 1 to 9, **characterized**
**in that** the exit point (24), the entry point (24') and mirrors (25) for beam guidance form a second optical unit (2') on the platform (4); and
**in that** the laser source (21) and the laser detector (23) form a platform-distant optical unit (2") on a further base (50').

13. A method for operating a laser scanner (1) as claimed in any one of patent claims 1 to 12, wherein the parallel kinematic drive (5) is attached to the platform (4),
**characterized**
**in that** first state signals (75) are transmitted to an evaluation unit (7) from the parallel kinematic drive (5);
**in that** second state signals (75') are transmitted to the evaluation unit (7) from the pickup (58); in that further state signals (72) are transmitted to the evaluation unit (7) from the laser source (21) and from the laser detector (23); and
**in that** the evaluation unit (7) establishes distance values between the laser scanner (1) and scattering points of the object (3) from the first state signals (75), the second state signals (75') and the further state signals (72).

## Revendications

1. Scanneur laser (1) destiné à mesurer une surface d'espaces et/ou d'objets (3) et à obtenir un nuage de points restituant la surface par des coordonnées, comportant
• une source laser (21) destinée à émettre une lumière laser (22), et un détecteur laser (23) destiné à recevoir la lumière laser (22) de la source laser (21),
• une plateforme (4) pouvant, lors du balayage, basculer par rapport à une base (50) fixe du scanneur laser (1), les éléments suivants étant disposés sur cette plateforme (4) :
∘ un point de sortie (24) pour la sortie de la lumière laser (22) émise sous forme d'un faisceau laser uni et dirigée sur un point de la surface et
∘ un point d'entrée (24') pour l'entrée de la lumière laser (22) dispersée sur le point de la surface,
• une fonction de mesure de distance visant à déterminer une distance par rapport au point de la surface en exploitant la lumière laser (22) dispersée sur le point de la surface et reçue par le détecteur laser (23), et
• des moyens de détection d'une direction spatiale orientée vers le point de la surface, ces moyens présentant notamment un ou plusieurs capteurs (58) destinés à déterminer une position de basculement de la plateforme (4) par rapport à la base (50) ;
un entraînement parallèle-cinématique (5) effectuant un basculement de la plateforme (4) par rapport à la base pour balayer le faisceau laser sur une pluralité de points de la surface, et
l'entraînement parallèle-cinématique (5) présentant plusieurs actionneurs (5') disposés sur la plateforme (4) dans un plan d'entraînement et agissant chacun directement sur la plateforme (4) ; et
l'entraînement parallèle-cinématique (5) produisant de préférence un premier signal d'état (75) pour chaque position d'actionneur (5'), et
les actionneurs (5') étant fixés sur la base (50) et dirigeant au moins une partie de la charge de la plateforme (4) vers la base (50), **caractérisé en ce que**
les actionneurs (5') sont conçus de manière à atténuer au moins une partie des vibrations de l'entraînement parallèle-cinématique (5).

2. Scanneur laser (1) selon la revendication 1, **caractérisé en ce que** l'entraînement parallèle-cinématique (5) fait basculer la plateforme (4) avec une vitesse de balayage quasiment égale dans le sens horizontal et dans le sens vertical.

3. Scanneur laser (1) selon l'une des revendications 1 et 2, **caractérisé**
**en ce que** l'entraînement parallèle-cinématique (5) présente au moins deux actionneurs (5') ; et
**en ce que** chacun des actionneurs (5') est soit un actionneur linéaire, soit un actionneur rotatif.

4. Scanneur laser (1) selon la revendication 3, dans lequel au moins un des actionneurs (5') est un actionneur rotatif, **caractérisé en ce que** l'actionneur rotatif présente un entraînement rotatif (53), un bras rotatif (54, 54') et un dispositif d'appui (55 à 57').

5. Scanneur laser (1) selon l'une des revendications 1 à 4, **caractérisé**
**en ce que** l'entraînement parallèle-cinématique (5) présente un stabilisateur (5") ;
**en ce que** le stabilisateur (5") est fixé directement à la plateforme (4) avec un premier dispositif d'appui (55 à 57') ;
**en ce que** le stabilisateur (5") est fixé directement à une base (50) avec un autre dispositif d'appui (55 à 57') ;
**en ce que** ces dispositifs d'appui (55 à 57') sont reliés mécaniquement l'un à l'autre par un bras articulé (54) ; et
**en ce que** le stabilisateur (5") dirige au moins une partie de la charge de la plateforme (4) vers la base (50).

6. Scanneur laser (1) selon la revendication 5, **caractérisé en ce que** le stabilisateur (5") atténue au moins une partie des vibrations de l'entraînement parallèle-cinématique (5).

7. Scanneur laser (1) selon l'une des revendications 4 et 5, **caractérisé en ce que**
le dispositif d'appui (55 à 57') est un palier à rotule (55, 55') ou un roulement (56) ou un élément flexible (57, 57').

8. Scanneur laser (1) selon l'une des revendications 1 à 7, les moyens présentant un capteur (58) permettant de déterminer le basculement de la plateforme (4) par rapport à la base (50), **caractérisé en ce que** le capteur (58) émet, pour chaque basculement de la plateforme (4) par rapport à la base (50) capté, un deuxième signal d'état (75') lié à la position de basculement de la plateforme (4) par rapport à la base.

9. Scanneur laser (1) selon la revendication 8, **caractérisé**
**en ce que** un capteur (58) est associé à un actionneur (5'), et ce capteur (58) détermine le basculement de la plateforme (4) par rapport à la base (50) à proximité de l'actionneur (5') qui lui est associé, et/ou en ce qu'un capteur (58) est associé à un stabilisateur (5"), et ce capteur (58) détermine le basculement de la plateforme (4) par rapport à la base (50) à proximité du stabilisateur (5") qui lui est associé.

10. Scanneur laser (1) selon l'une des revendications 1 à 9, **caractérisé en ce que**
la source laser (21), le détecteur laser (23), le point de sortie (24), le point d'entrée (24') et des miroirs (25) destinés à guider le faisceau sur la plateforme (4) forment une première unité optique (2).

11. Scanneur laser (1) selon la revendication 10, **caractérisé**
**en ce que** la première unité optique (2) émet d'autres signaux d'état (72) par l'intermédiaire de lignes électriques ou optiques, de préférence par l'intermédiaire de fibres optiques, et/ou
**en ce que** la première unité optique (2) émet des deuxièmes signaux d'état (75') et d'autres signaux d'état (72) par l'intermédiaire de lignes électriques ou optiques, de préférence par l'intermédiaire de fibres optiques.

12. Scanneur laser (1) selon l'une des revendications 1 à 9, **caractérisé**
**en ce que** le point de sortie (24), le point d'entrée (24') et des miroirs (25) destinée à guider le faisceau sur la plateforme (4) forment une deuxième unité optique (2'), et
**en ce que** la source laser (21) et le détecteur laser (23) forment, sur une autre base (50'), une unité optique (2") distante de la plateforme.

13. Procédé d'exploitation d'un scanneur laser (1) selon l'une des revendications 1 à 12, dans lequel l'entraînement parallèle-cinématique (5) est fixé sur la plateforme (4), **caractérisé**
**en ce que** des premiers signaux d'état (75) issus de l'entraînement parallèle-cinématique (5) sont transmis à une unité d'évaluation (7) ;
**en ce que** des deuxièmes signaux d'état (75') issus du capteur (58) sont transmis à l'unité d'évaluation (7) ;
**en ce que** d'autres signaux d'état (72) issus de la source laser (21) et du détecteur laser (23) sont transmis à l'unité d'évaluation (7) ; et
**en ce que** l'unité d'évaluation (7) détermine des valeurs de distance séparant le scanneur laser (1) et des points de dispersion de l'objet (3) à partir des premiers signaux d'état (75), des deuxièmes signaux d'état (75') et des autres signaux d'état (72).
